# EUROPÄISCHE PATENTANMELDUNG

(11) **EP 4 697 222 A1**
(43) Veröffentlichungstag der Anmeldung: **18.02.2026**
(21) Anmeldenummer: 25189358.2
(22) Anmeldetag: 14.07.2025
(51) Int. Cl.: G06F 21/64, H04L 9/32, H04L 9/40

(54) **VERFAHREN UND SYSTEM ZUM NICHT-ABSTREITBAREN SIGNIEREN VON DATENÜBERTRAGUNGEN IN ZEITKRITISCHEN ANWENDUNGEN**

(30) Priorität: 12.08.2024 DE 102024122954
(71) Anmelder: Airbus Defence and Space GmbH, 82024 Taufkirchen (DE)
(72) Erfinder: SCHMITZ, Matthias, 82024 Taufkirchen (DE); TOBECK, Nils, 82024 Taufkirchen (DE)
(74) Vertreter: LKGLOBAL Partnerschaftsgesellschaft mbB

(57) **Zusammenfassung**

Es wird ein Verfahren (100) zum nicht-abstreitbaren Übertragen von signierten Daten (40) zwischen einem Sender (10) und einem Empfänger (20) in zeitkritischen Anwendungen offenbart. Das Verfahren umfasst das Bereitstellen (110) von zu übertragenden Daten (30) durch den Sender (10), das Signieren (120) der zu übertragenden Daten (30) mittels eines symmetrischen Kryptographieverfahrens unter Verwendung eines symmetrischen Schlüssels (50), um symmetrisch signierten Daten (40) zu erhalten, das Übertragen (130) der symmetrisch signierten Daten (40) von dem Sender (10) zu dem Empfänger (20) über einen Übertragungsweg (90), das Signieren (140) der zu übertragenden Daten (30) mittels eines asymmetrischen Kryptographieverfahrens unter Verwendung eines privaten Schlüssels (61) des Senders (10), um asymmetrische signierte Daten (70) zu erhalten, und das Speichern (150) der asymmetrisch signierten Daten (70) in einem Audit-Speicher (80). Ferner wird eine entsprechende Vorrichtung (200) zum Übertragen der signierten Daten und ein System (300) mit einer solchen Vorrichtung (200) offenbart, wobei die Vorrichtung (200) zum Durchführen des offenbarten Verfahrens (100) konfiguriert ist.

## Beschreibung

### TECHNISCHES GEBIET

Die vorliegende Offenbarung bezieht sich auf ein Verfahren, eine Vorrichtung und ein System zum nicht-abstreitbaren Signieren von Datenübertragungen, insbesondere für zeitkritische Anwendungen, wie sie beispielsweise im militärischen Luftfahrtbereich auftreten.

### TECHNISCHER HINTERGRUND

Zur Absicherung von Kommunikationsverbindungen unterscheidet man zwischen der Absicherung der eigentlichen Kommunikationsverbindung (z.B. durch eine verschlüsselte Kommunikationsverbindung selbst) und der Absicherung der übertragenen Daten , d.h. datenzentrierter Sicherheit (Engl.: Data Centric Security) oder Zero Trust Architectur (ZTA). Angesichts immer ausgefeilterer Cyber-Bedrohungen ist die datenzentrierte Sicherheit (DCS) ein Schlüssel-Paradigma, um einen mehrschichtigen Cyber-Schutz zu gewährleisten. Ein Schlüsselmerkmal bei der Umsetzung von DCS ist die Anwendung einer digitalen Signatur, die den Schutz der Integrität, Authentizität, und Unverfälschbarkeit bzw. Nichtabstreitbarkeit der Daten D gewährleistet.

Im Stand der Technik sind Signierverfahren für Daten, um die Herkunft der Daten sicherzustellen, grundsätzlich bekannt, wobei man insbesondere zwischen Signaturen basierend auf asymmetrischen Kryptographieverfahren und Signaturen basierend auf symmetrischen Kryptographieverfahren unterscheidet.

Insbesondere um eine Nichtabstreitbarkeit (Engl.: non-repudiation) einer Datenübertragung sicherzustellen, sind dabei grundsätzlich Signaturen basierend auf asymmetrischen Kryptographieverfahren bevorzugt, da bei diesen, im Folgenden auch asymmetrische Signaturverfahren, genannten Verfahren eine Signatur mittels eines privaten Schlüssels des Senders erfolgt, welcher nicht öffentlich zugänglich ist. Der Empfänger kann die signierten Daten dann mit dem zugehörigen öffentlichen Schlüssel des Senders überprüfen. Im Gegensatz dazu verwenden symmetrische Kryptographieverfahren symmetrische Schlüssel, d.h. sowohl der Sender als auch der Empfänger verwenden den gleichen Schlüssel, sowohl zur Verschlüsselung und Entschlüsselung als auch zum Signieren und Überprüfen der Signatur. Symmetrische Kryptographieverfahren stellen deshalb keine Nichtabstreitbarkeit der Echtheit der Signatur bereit, da zumindest alle Inhaber des symmetrischen Schlüssels die Daten mit dem symmetrischen Schlüssel entsprechend signieren könnten, was dem Sender ermöglicht, die Echtheit der Signatur zu bestreiten.

Obwohl hinsichtlich der Sicherstellung der Nichtabstreitbarkeit von Signaturen asymmetrische Kryptographieverfahren bevorzugt sind, ist allerdings die Erzeugung und Überprüfung von solchen digitalen Signaturen oder Sicherheitskennzeichen auf der Grundlage asymmetrischer Kryptographie (Public Key Infrastructure (PKI), z. B. RSA, ECDSA), wie sie von den meisten derzeitigen Lösungen verwendet wird, zeit- und rechenaufwändig. Derartige Verfahren werden meist in Anwendungen, in welchen Menschen beteiligt sind, verwendet. Aufgrund des hohen Rechenaufwands ist die Verwendung asymmetrischer Kryptographieverfahren in der Kommunikation insbesondere in zeitkritischen Szenarien, wie diese beispielsweise in der Luftfahrt, insbesondere im militärischen Bereich, auftreten können, nicht immer durchführbar. Darüber hinaus können die asymmetrischen Algorithmen durch die Entwicklung von Quantencomputern, die quantensichere Algorithmen erfordern, angreifbar werden, was dann noch mehr Zeit in Anspruch nehmen kann.

Digitale Signaturen oder Sicherheitskennzeichen auf der Grundlage der symmetrischen Kryptographie (z. B. HMAC) hingegen sind viel schneller und weniger ressourcenintensiv. Sie bieten jedoch, wie oben dargelegt, keine Nichtabstreitbarkeit, da die symmetrischen Schlüssel zwischen Absender und Empfänger ausgetauscht werden müssen.

Daher kann eine auf symmetrischer Kryptographie basierende Signatur bei einer forensischen Analyse eines Sicherheitsvorfalls nicht eindeutig einer einzigen signierenden Stelle (z.B. einem Flugzeug) zugeordnet werden.

Bisher ist keine Lösung bekannt, die nicht-abstreitbare Signaturen oder Sicherheitskennzeichen in einer Weise bereitstellt, die eine Anwendung unter zeitkritischen Bedingungen, insbesondere in Fast-Echtzeitbedingungen, ermöglicht.

### BESCHREIBUNG

Dementsprechend ist es Aufgabe der Erfindung, einen nicht-abstreitbare Datenaustausch, insbesondere auch in zeitkritischen Szenarien, zu ermöglichen.

Diese Aufgabe wird durch die Gegenstände der unabhängigen Ansprüche gelöst. Weitere Ausführungsformen ergeben sich aus den abhängigen Ansprüchen sowie aus der folgenden Beschreibung.

Die Erfindung basiert auf einer Kombination von symmetrischen und asymmetrischen Kryptographieverfahren zum Absichern der Kommunikation, beispielsweise im militärischen Luftfahrtbereich, aber auch in anderen zeitkritischen Szenarien. So stellen symmetrische Kryptographieverfahren dabei insbesondere eine schnelle und dennoch die Integrität und Authentizität sicherstellende Kommunikation bereit. D.h. gemäß der Erfindung erfolgt die eigentliche Kommunikation zwischen einem Sender und Empfänger mittels symmetrischen Kryptographieverfahren, welche aufgrund des gegenüber asymmetrischen Verfahren deutlich geringeren Rechenaufwands einen schnellen Signierprozess (und eventuell auch Verschlüsselungsprozess) und Datenaustausch sicherstellen. Um die erforderliche Nichtabstreitbarkeit der Daten sicherzustellen, werden die signierten Daten jedoch parallel auch unter Verwendung eines asymmetrischen Kryptographieverfahrens signiert und/oder verschlüsselt. Die daraus resultierenden asymmetrisch signierten Daten werden dann in einem Audit-Speicher abgelegt, um im Falle einer später eventuell notwendigen forensischen Analyse eines Sicherheitsvorfalls eine eindeutige Zuordnung der gesendeten Daten zu einer einzigen signierenden Stelle (z.B. einem Sender-Flugzeug) zu ermöglichen. Der asymmetrische Signaturvorgang kann sich dabei insbesondere auch zeitlich über den symmetrischen Signaturvorgang hinaus erstrecken, ohne die notwendige schnelle (z.B. Fast-Echtzeit-Kommunikation) zu beeinträchtigen.

Hierin wird sowohl ein Verfahren zum nicht-abstreitbaren Übertragen von signierten Daten zwischen einem Sender und Empfänger (erster Aspekt), eine Vorrichtung zum Durchführen des Verfahrens (zweiter Aspekt), als auch ein System mit einer solchen Vorrichtung (dritter Aspekt) beschrieben. Sämtliche Merkmale, die hinsichtlich eines dieser Aspekte hierin beschrieben werden, sind vollumfänglich auch für die anderen Aspekte gültig und werden explizit für alle Aspekte offenbart. Beispielsweise sind Merkmale, die bezüglich des Verfahrens beschrieben sind, uneingeschränkt für die Vorrichtungs-Gegenstände gültig und umgekehrt.

Gemäß einem ersten Aspekt wird ein Verfahren zum nicht-abstreitbaren Übertragen von signierten Daten zwischen einem Sender und einem Empfänger in zeitkritischen Anwendungen offenbart. Das Verfahren umfasst das Bereitstellen von zu übertragenden Daten durch den Sender, das Signieren der zu übertragenden Daten mittels eines symmetrischen Kryptographieverfahrens unter Verwendung eines symmetrischen Schlüssels, um symmetrisch signierte Daten zu erhalten, das Übertragen der symmetrisch signierten Daten von dem Sender zu dem Empfänger über einen Übertragungsweg, das Signieren der zu übertragenden Daten mittels eines asymmetrischen Kryptographieverfahrens unter Verwendung eines privaten Schlüssels des Senders, um asymmetrisch signierte Daten zu erhalten, und das Speichern der asymmetrisch signierten Daten in einem Audit-Speicher.

Der Sender kann beispielsweise ein Flugzeug (insbesondere ein militärisches Flugzeug) aber auch eine andere Entität sein. Der Empfänger kann beispielsweise ein anderes Flugzeug, eine Bodenstation, oder auch eine andere Entität sein. Die zu übertragenden Daten können dabei insbesondere zeitkritische Daten sein, wie sie beispielsweise bei der Kollaboration mehrerer Flugzeuge auftreten können. Ein Beispiel solcher Daten sind Radardaten, die gemeinsam durch mehrere Flugzeuge gesammelt und kollaborativ verwertet werden. Die zu übertragenden Daten entsprechen dabei Daten, die von dem Sender an den Empfänger gesendet werden sollen.

Das Verfahren kombiniert symmetrische und asymmetrischen Kryptographieverfahren, um zum einen schnellen und dennoch abgesicherten Datenaustausch und zum anderen eine Nichtabstreitbarkeit sicherzustellen. Der schnelle Datenaustausch wird dabei durch die Signatur der Daten mittels symmetrischer Kryptographieverfahren sichergestellt. Die so symmetrisch signierten Daten werden dann an den Empfänger gesendet. Die zu übertragenden Daten werden allerdings parallel zusätzlich mittels eines asymmetrischen Kryptographieverfahrens signiert. Diese asymmetrisch signierten Daten werden dann in einem Audit-Speicher abgelegt, um zur späteren Überprüfung, beispielsweise für eine forensische Analyse, zur Verfügung zu stehen. Um eine Manipulation der Daten in dem Audit-Speicher zu vermeiden, kann optional ein Audit-Speicher mit entsprechenden Speicherelementen, die lediglich einmal beschrieben werden können, verwendet werden.

Die Übertragung der symmetrisch signierten Daten an den Empfänger kann, je nach Anwendungsszenario des Verfahrens, kabellos (beispielsweise mittels entsprechender Funkverbindungen) oder kabelgebunden erfolgen. Wenn beispielsweise Daten zwischen zwei oder mehr Flugzeugen oder einem Flugzeug und einer Bodenstation ausgetauscht werden, findet die Datenübertragung üblicherweise kabellos statt. Wenn jedoch beispielsweise zwei Bodenstationen oder andere bodengebundene Entitäten Daten austauschen, kann die Datenübertragung entweder kabelgebunden oder kabellos erfolgen.

Da asymmetrische Kryptographieverfahren im Allgemeinen rechenaufwändiger sind, kann das parallele Signieren mittels des asymmetrischen Kryptographieverfahrens zeitlich länger andauern, als das Signieren mittels des symmetrischen Kryptographieverfahrens. So anfallende Daten können beispielsweise nach einem First-In-First-Out-Prinzip (FIFO-Prinzip) in einer Warteschlange für die asymmetrischen Kryptographie nacheinander abgearbeitet werden, ohne die eigentliche Datenübertragung zu blockieren.

Als symmetrisches Kryptographieverfahren kommt jedes denkbare symmetrische Kryptographieverfahren, insbesondere besonders ressourcensparende Verfahren, in Betracht. Ebenso kommt als asymmetrisches Kryptographieverfahren jedes denkbare asymmetrischen Kryptographieverfahren in Betracht.

Das Signieren der zu übertragenden Daten mittels des symmetrischen Kryptographieverfahrens erfolgt mittels eines symmetrischen Schlüssels (beispielsweise durch eine entsprechende Vorrichtung des Senders) welcher mit dem Empfänger geteilt wird. Das Signieren der zu übertragenden Daten mittels des asymmetrischen Kryptographieverfahrens erfolgt mittels eines dem Sender zugeordneten privaten Schlüssel. Diese Daten können, wenn nötig, mit dem zugehörigen öffentlichen Schlüssel des asymmetrischen Schlüsselpaares verifiziert werden. Die Funktionsweise symmetrischer und asymmetrischer Kryptographieverfahren sind dem Fachmann grundsätzlich bekannt. Ebenso sind Lösungen zur Generierung, zum Austausch, zur Verifikation und zur Verwaltung symmetrischer und asymmetrischer Schlüssel hinlänglich bekannt.

Das erfindungsgemäße Verfahren kann beispielsweise mit einer weiter unten beschriebenen erfindungsgemäßen Vorrichtung durchgeführt werden. Eine solche Vorrichtung kann beispielsweise Teil des Senders selbst sein oder eine vertrauenswürdige, mit dem Sender in Verbindung stehende andere Entität sein. Für eine bidirektionale Kommunikation kann zudem der Empfänger selbst als Sender fungieren und die entsprechenden Verfahrensschritte, jedoch in der anderen Richtung, ausführen. Die Bezeichnung als Sender und Empfänger ist lediglich auf eine Kommunikationsrichtung gerichtet und nicht einschränkend auf eine unidirektionale Datenübertragung zu verstehen. In der anderen Übertragungsrichtung wird der Sender zum Empfänger und umgekehrt. Zudem können auch mehrere Sender, von denen jeder das Verfahren implementieren kann, und mehrere Empfänger vorgesehen sein.

Gemäß einer Ausführungsform umfasst das Verfahren ferner das Verifizieren der Integrität und der Authentizität der übertragenen symmetrisch signierten Daten durch den Empfänger unter Verwendung des symmetrischen Schlüssels.

Insbesondere kann der Empfänger mittels des symmetrischen Schlüssels die Herkunft der Daten prüfen. Um eine Nichtabstreitbarkeit dieses Herkunftsnachweises durch den Sender zu erreichen, können später im Streitfall die in dem Audit-Speicher vorgehaltenen zugeordneten asymmetrisch signierten Daten mittels des dem Sender zugeordneten öffentlichen Schlüssel überprüft werden.

Gemäß einer weiteren Ausführungsform wird das Signieren mittels des asymmetrischen Kryptographieverfahrens gleichzeitig mit dem Signieren mittels des symmetrischen Kryptographieverfahrens eingeleitet.

Dabei werden die beiden Signierverfahren lediglich gleichzeitig initiiert. Das asymmetrische Signaturverfahren kann allerdings selbstverständlich zeitlich länger andauern und beispielsweise in der Art einer Warteschleife abgearbeitet werden. Die Datenübertragung wird dadurch aber nicht blockiert, da das symmetrische und das asymmetrische Verfahren gleichzeitig ablaufen und die Datenübertragung lediglich auf dem schnellen symmetrischen Kryptographieverfahren beruht.

Gemäß einer weiteren Ausführungsform umfasst das Übertragen der symmetrisch signierten Daten das Übertragen der symmetrisch signierten Daten über ein in dem Übertragungsweg vorhandenes Gateway, welches die symmetrisch signierten Daten von dem Sender empfängt und an den Empfänger weiterleitet.

Ein solches Gateway kann beispielsweise eine Bodenstation oder eine andere entsprechende Einrichtung sein. Auch kann das Gateway eine Hardwarekomponente des Senders selbst sein, welche die entsprechenden Funktionen erfüllt. Das Gateway dient dabei als eine Art Gatekeeper bzw. Sicherheitsperimeter des Senders, das beispielsweise (z.B. und ohne Einschränkung in einem militärischen Kontext, in welchem mehrere Länder bzw. deren militärische Flugzeuge zusammenarbeiten oder auch nicht) verhindert, dass Daten, die nur für Flugzeuge der eigenen Nation bestimmt sind, an Flugzeuge einer anderen Nation gesendet werden.

Gemäß einer weiteren Ausführungsform umfassen die zu übertragenden Daten Nutzdaten und Metadaten.

Die Nutzdaten entsprechen dabei insbesondere den eigentlichen zu übertragenen Daten, welche für den Empfänger von Nutzen sind (in dem militärischen Luftfahrzeugbeispiel beispielsweise Radardaten). Die Metadaten wiederum umfassen Daten, die selbst keine Nutzdaten sind, diesen aber zugeordnet sind. Metadaten umfassen z. B. eine Sicherheitsklassifizierung der Daten sowie eine Freigabe für bestimmte Personen, Gruppen oder Nationen, wie oben beschrieben.

Gemäß einer weiteren Ausführungsform umfasst das Signieren der zu übertragenden Daten mittels des symmetrischen Kryptographieverfahrens das Signieren nur der Nutzdaten der zu übertragenden Daten.

Gemäß einer weiteren Ausführungsform umfasst das Signieren der zu übertragenden Daten mittels des symmetrischen Kryptographieverfahrens das Signieren sowohl der Nutzdaten als auch der Metadaten der zu übertragenden Daten.

Solche vollständig (d.h. Nutzdaten und Metadaten) signierte Daten werden insbesondere im militärischen Bereich auch als Sicherheitskennzeichen bezeichnet. Durch das Signieren sowohl der Nutzdaten als auch der Metadaten schützen diese Sicherheitskennzeichen die Integrität, Authentizität und Nichtabstreitbarkeit (die Nichtabstreitbarkeit wiederum über die asymmetrisch signierten Daten in dem Audit-Speicher) der Daten sowie ihrer Metadaten. Insbesondere kann dadurch entweder durch den Empfänger oder ein Gateway, wie oben beschrieben, sichergestellt werden, dass die Metadaten und damit beispielsweise eine Sicherheitsklassifizierung der Daten sowie eine Freigabe für bestimmte Personen, Gruppen oder Nationen, wie oben beschrieben, nicht manipuliert wurden (insbesondere nicht von Ausenstehenden, welche nicht im Besitz des symmetrischen Schlüssels sind). Insbesondere, wenn ein Gateway verwendet wird, wird dadurch sichergestellt, dass die zu übertragenden signierten Daten nicht in unbefugte Hände gelangen, da das Gateway zum einen die entsprechenden Freigaben erkennen kann und zum anderen auch deren Integrität und Authentizität sicherstellen kann. Das Gateway sendet die Daten dann nur an befugte Parteien weiter.

Gemäß einer weiteren Ausführungsform umfasst das Verfahren ferner das Verschlüsseln der symmetrisch signierten Daten vor dem Übertragen der symmetrisch signierten Daten an den Empfänger.

Eine solche Verschlüsselung kann die Datensicherheit weiter erhöhen, da so nicht nur die Integrität, Authentizität und Nichtabstreitbarkeit sichergestellt wird, sondern auch sichergestellt ist, dass Unbefugte die Daten nicht lesen können.

Gemäß einem zweiten Aspekt wird eine Vorrichtung zum nicht-abstreitbaren Übertragen von signierten Daten zwischen einem Sender und einem Empfänger offenbart. Das System umfasst ein Datenverarbeitungsmodul, ein Schlüssel-Speicherelement, und einen Audit-Speicher. Das System ist konfiguriert, das Verfahren gemäß einer der hierin beschriebenen Ausführungsformen auszuführen. Das Datenverarbeitungsmodul ist konfiguriert, den symmetrischen Schlüssel aus dem Schlüssel-Speicherelement abzurufen und das Signieren der zu übertragenden Daten mittels des symmetrischen Kryptographieverfahrens durchzuführen, den privaten Schlüssel aus dem Schlüssel-Speicherelement abzurufen und das Signieren der zu übertragenden Daten mittels des asymmetrischen Kryptographieverfahrens durchzuführen, das Übertragen der symmetrisch signierten Daten, durchzuführen, und das Speichern der asymmetrisch signierten Daten durchzuführen.

Die Vorrichtung ist konfiguriert, das oben im Detail beschriebenen Verfahren gemäß irgendeiner der beschriebenen Ausführungsformen auszuführen. Die entsprechenden Erläuterungen sind uneingeschränkt für die Vorrichtung gültig und werden hier der Kürze halber nicht wiederholt.

Die Vorrichtung kann beispielsweise ein Teil des Senders selbst (z.B. eine entsprechende Vorrichtung in einem Flugzeug) sein. Es ist auch denkbar, dass die Vorrichtung durch einen Bordcomputer eines Senders (wie beispielsweise eines Flugzeugs) implementiert wird. Die Vorrichtung kann allerdings auch eine eigenständige Komponente sein, die entweder in den Sender eingebaut werden kann oder mit diesem in Kommunikationsverbindung steht.

Das Datenverarbeitungsmodul kann beispielsweise eine Computervorrichtung, wie ein Allzweckcomputer mit entsprechenden Prozessor- und Speicherkomponenten, ein ASIC, ein FPGA, oder jede andere geeignete Computervorrichtung sein, die in der Lage ist, die zu sendenden Daten zu signieren und/oder zu verschlüsseln und an den Empfänger (oder, in entsprechenden Ausführungsformen, an ein Gateway, welches die Daten an den Empfänger weiterleitet) zu versenden.

Das Schlüssel-Speicherelement kann jedes geeignete Speicherelement sein, welches den symmetrischen Schlüssel für die Durchführung des symmetrischen Kryptographieverfahrens und den privaten Schlüssel zur Durchführung des asymmetrischen Kryptographieverfahrens speichern kann. Bevorzugt ist das Schlüssel-Speicherelement ein sicheres Element, wie weiter unten beschrieben. Wenn ein solches sicheres Element verwendet wird, kann optional auch das Datenverarbeitungsmodul Teil des sicheren Elements sein. Im Allgemeinen kann jedes des Datenverarbeitungsmoduls, des Schlüssel-Speicherelements, und des Audit-Speichers entweder ein separates Hardware-Element sein oder mehrere dieser Elemente können in einem gemeinsamen Hardware-Element verkörpert sein. Insbesondere das Datenverarbeitungselement und dessen Funktionen können auch als logische Komponenten in einem entsprechenden Hardware-Element verkörpert sein.

Das Audit-Speicherelement kann jedes geeignete Speicherelement zum Speichern der mittels des asymmetrischen Kryptographieverfahrens signierten Daten sein, wie beispielsweise ein Flash-Speicher, ein Festplattenlaufwerk (HDD), ein Solid-State-Drive (SSD), ein optisches Laufwerk mit einem entsprechenden Datenträger, oder jedes andere geeignete Speicherelement.

Gemäß einer Ausführungsform ist das Schlüssel-Speicherelement ein sicheres Element.

Ein solches sicheres Element (Engl.: Secure Element, SE) ist ein speziell abgesichertes Betriebssystem (Engl.: Operating System, OS) auf Basis einer manipulationssicheren Hardwarekomponente. Es schützt im Allgemeinen Werte und Informationen (z. B. Schlüssel, digitale Zertifikate, Zugangsberechtigungen, Guthaben und andere sensible Daten) vor ausgefeilten Angriffen durch Hacker. SE-Anwendungen sind abgeschottet und arbeiten in einer kontrollierten Umgebung, die nicht durch Software (einschließlich möglicher Schadprogramme) aus anderen Bereichen eines allgemeinen Betriebssystems beeinträchtigt werden kann. Im Gegensatz zu softwarebasierten Lösungen bieten sichere Elemente eine höhere Sicherheit und können Angriffe von Malware, Hackern und anderen böswilligen Akteuren abwehren. Sichere Elemente sind beispielsweise aus Chipkarten/Smartcards wie Zahlungskarten, SIM-Karten, Identifikationskarten etc. bekannt. Durch die Verwendung solcher sicherer Elemente als Schlüssel-Speicherelement in der offenbarten Vorrichtung wird der Schutz der entsprechenden asymmetrischen und symmetrischen Schlüssel weiter verbessert.

Durch die zunehmende Verbreitung von eingebetteten sicheren Elementen (Engl.: embedded Secure Elements, eSE) und integrierter Universal-Schaltkreiskarten (Engl.: embedded Universal Integrated Circuit Cards, eUICC) und durch immer leistungsfähigere Hardware der eSEs ist es zudem auch möglich, mehrere Anwendungen innerhalb eines einzigen Secure Elements zu integrieren. Beispielsweise kann das sichere Element auch selbst als Datenverarbeitungsmodul dienen, dass die Signiervorgänge und/oder Verschlüsselungsvorgänge durchführt.

Gemäß einer weiteren Ausführungsform umfasst die Vorrichtung ferner ein Verschlüsselungsmodul. Das Verschlüsselungsmodul ist konfiguriert, die zu übertragenden Daten zu verschlüsseln.

Das Verschlüsselungsmodul kann ebenso entweder ein eigenständiges Hardware-Element, eine entsprechende Logik-Komponente, oder ein Teil des Datenverarbeitungsmoduls sein. Das Verschlüsselungsmodul kann insbesondere konfiguriert sein, die symmetrisch signierten Daten (entweder vor dem Signieren, nach dem Signieren oder gleichzeitig mit dem Signieren) mittels des symmetrischen Kryptographieverfahrens zu verschlüsseln, so dass die Datenübertragung weiter abgesichert wird.

Gemäß einem dritten Aspekt wird ein System offenbart. Das System umfasst einen Sender und eine Vorrichtung nach einer der hierin beschriebenen Ausführungsformen. Die Vorrichtung ist Teil des Senders.

Das System kann beispielsweise ein Flugzeug sein, welches eine zuvor beschriebene Vorrichtung umfasst, welche wiederum konfiguriert ist, das hierin beschriebenen Verfahren durchzuführen. Allerdings kann das System auch einfach eine Kombination aus einer entsprechenden erfindungsgemäßen Vorrichtung und einem Sender sein, wobei die Vorrichtung und der Sender (z.B. ein Flugzeug) nicht zwangsläufig am selben Ort sein müssen. Beispielsweise könnte die Vorrichtung auch in einer Bodenstation angeordnet sein, welche (z.B. über eine verschlüsselte Kommunikationsverbindung) mit dem Sender (z.B. einem Flugzeug) in Kommunikation steht.

Gemäß einer Ausführungsform umfasst das System ferner ein mit der Vorrichtung in Kommunikation stehendes Gateway.

Das Gateway kann ebenfalls ein eigenständiges Gerät sein, als Software in der Vorrichtung des System selbst implementiert sein, in den Sender oder Empfänger (welcher optional ebenfalls Teil des System sein kann) als Hardware oder Software integriert sein, oder in jeder anderen geeigneten Weise ausgeführt sein.

Gemäß einer Ausführungsform ist das Gateway konfiguriert ist, die symmetrisch signierten Daten zu empfangen, Metadaten der symmetrisch signierten Daten auszuwerten, und die symmetrischen signierten Daten in Übereinstimmung mit Vorgaben in den Metadaten an den Empfänger weiterzuleiten.

Die Funktion des Gateways wurde hierin weiter oben im Detail dargelegt. Die entsprechenden Erläuterungen werden deshalb hier der Kürze halber nicht wiederholt. Es wird auf die entsprechenden Ausführungen bei der Diskussion des erfindungsgemäßen Verfahrens verwiesen.

Gemäß einer weiteren Ausführungsform umfasst das System ferner einen Empfänger. Sowohl der Sender als auch der Empfänger ist jeweils ein Luftfahrzeug.

Insbesondere der Sender und der Empfänger befinden sich dabei im Betrieb regelmäßig nicht am gleichen Ort, sondern stehen, über die hierin beschriebene Vorrichtung, in Kommunikation zueinander, insbesondere über eine Funkverbindung.

Zusammengefasst kombinieren die offenbarten Verfahren, Vorrichtungen und System die Vorteile symmetrischer Kryptographieverfahren und asymmetrischer Kryptographieverfahren und gewährleisten die rechtzeitige Erstellung von Sicherheitskennzeichen/Signaturen, die für einen sicheren Informationsaustausch im Rahmen des Paradigmas der datenzentrierten Sicherheit erforderlich sind. Das offenbarte Konzept ermöglicht die Nutzung dieser erweiterten Sicherheitskennzeichen auch für zeitkritische Anwendungen (z. B. Sensordatenfusion im Luftfahrtbereich, aber auch in anderen Bereichen), ohne dass die Fähigkeit zur Durchführung von Sicherheitsaudits bei sicherheitskritischen Funktionen verloren geht.

### KURZBESCHREIBUNG DER FIGUREN

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- **Fig. 1**: Ein schematisches Diagramm eines System mit einer Vorrichtung zum nicht-abstreitbaren Übertragen von signierten Daten zwischen einem Sender und Empfänger.
- **Fig. 2**: Ein Flussdiagramm eines Verfahrens zum nicht-abstreitbaren Übertragen von signierten Daten zwischen einem Sender und Empfänger, das beispielsweise mit dem System und der Vorrichtung der Fig. 1 durchgeführt werden kann.
- **Fig. 3**: Ein beispielhaftes Szenario zum Signieren von zu übertragenden Daten, in welchem nur Nutzdaten der zu übertragenden Daten signiert werden.
- **Fig. 4**: Ein beispielhaftes Szenario zum Signieren von zu übertragenden Daten, in welchem sowohl die Nutzdaten als auch Metadaten der zu übertragenden Daten signiert werden, um ein sogenanntes Sicherheitskennzeichen zu bilden.

### DETAILLIERTE BESCHREIBUNG

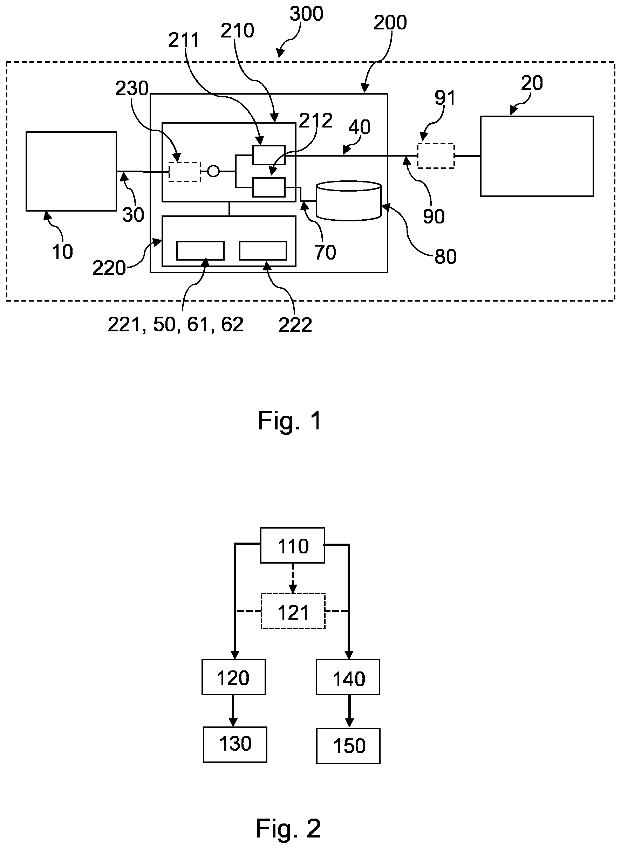

Fig. 1 zeigt schematisch ein System 300 gemäß der Offenbarung. Das System 300 umfasst in der dargestellten Ausführungsform einen Sender 10, einen Empfänger 20, eine Vorrichtung 200 zum nicht-abstreitbaren Übertragen von signierten Daten 40, und ein optionales Gateway 91. Obwohl die Systemgrenzen des System 300 in Fig. 1 so dargestellt sind, dass das System die Vorrichtung 100, den Sender 10, den Empfänger 20 und das Gateway 91 umfasst, sollte beachtet werden, dass die Systemgrenzen auch davon abweichen können. So kann das System 300 in der allgemeinsten Form auch nur den Sender 10 und die Vorrichtung 200 umfassen. Zudem sollte beachtet werden, dass die Vorrichtung 200 bevorzug ein Teil des Senders 10 selbst ist. In Fig. 1 ist die Vorrichtung 200 der Übersichtlichkeit halber als extern von dem Sender 10 dargestellt. Obwohl die Vorrichtung 200 bevorzugt Teil des Senders 10 ist, kann die Vorrichtung 200 durchaus auch, wie dargestellt, ein eigenes Gerät extern von dem Sender 10 sein. Zudem kann die Vorrichtung 200 auch eine externe bidirektionale Vorrichtung 200 sein, welche die entsprechend weiter unten beschriebenen Funktionen in beiden Richtungen ausführen kann, so dass der Empfänger 20 als Sender fungiert und der Sender 10 als Empfänger. Der Sender 10 und der Empfänger 20 können beispielsweise Flugzeuge sein, so dass die Vorrichtung 200 beispielsweise ein eigenständiges Hardware-Gerät in dem entsprechenden Sender-Flugzeug ausgestaltet ist oder beispielsweise auch eine logische Hardware-Komponente eines Geräts in dem Flugzeug ausgestaltet ist. In Ausführungen, in denen die Vorrichtung 200 ein externes Gerät ist, könnte die Vorrichtung, beispielsweise und ohne Einschränkung, in einer Bodenstation oder auch in einem dritten Flugzeug angeordnet sein bzw. ein Teil dessen sein.

Die Vorrichtung 200 umfasst ein Datenverarbeitungsmodul 210, ein Schlüssel-Speicherelement 220 und einen Audit-Speicher 80.

Das Datenverarbeitungsmodul 210 wiederum umfasst ein symmetrisches Signiermodul 211 und ein asymmetrisches Signiermodul 212, wobei zu beachten ist, dass das symmetrische Signiermodul 211 und das asymmetrische Signiermodul 212 als Hardware, als Software, oder als eine Kombination davon ausgestaltet sein kann. Beispielsweise könnte das Datenverarbeitungsmodul 210 oder die Vorrichtung 200 insgesamt als Allzweck-Computer mit einer CPU und entsprechenden Speicherkomponenten, als FPGA, als ASIC, oder als jede andere geeignete Verarbeitungshardware ausgestaltet sein, welche konfiguriert ist, die entsprechenden Funktion, wie hierin beschrieben, auszuführen. Das Datenverarbeitungsmodul 210 kann ferner ein optionales Verschlüsselungsmodul 230 beinhalten, das ebenfalls als Hardware-Komponente, als Software-Komponente, oder als Kombination davon ausgestaltet sein kann, welche die entsprechenden Funktionen ausführen.

Der Audit-Speicher 80 kann jede Art von geeignetem Datenspeicher, wie beispielsweise ein Flash-Speicher, ein Festplattenlaufwerk, ein Solid-State-Drive (SSD), ein optisches Laufwerk mit entsprechendem Datenträger, oder jedes andere geeignete Speicherelement sein. Der Audit-Speicher 80 ist mit einer Datenausgabe des asymmetrischen Signiermoduls 212 verbunden, so dass das asymmetrischen Signiermodul 212 asymmetrisch signierte Daten 70 in dem Audit-Speicher 80 speichern kann.

Das Schlüssel-Speicherelement 220 kann, ebenso wie der Audit-Speicher 80, jede Art von geeigneter Speicher sein und insbesondere einen Schlüsselspeicher 221 umfassen, in welchem zumindest ein symmetrischer Schlüssel 50 und ein privater Schlüssel 61 eines asymmetrischen Schlüsselpaares gespeichert ist. Bevorzugt ist das Schlüssel-Speicherelement 220 ein sicheres Element, wie hierin weiter oben im Detail beschrieben. Das Schlüssel-Speicherelement 220 kann optional auch ein Krypto-Modul 222 umfassen, welches die nachfolgend entsprechend beschriebenen kryptographischen Vorgänge (signieren, optional verschlüsseln) durchführen kann, ähnlich wie eine Smart-Card mit entsprechend isolierten und speziell abgesicherten Anwendungen. In solchen Ausführungen greifen das symmetrischen Signiermodul 211 und das asymmetrische Signiermodul 212 (sowie eventuell das optionale Verschlüsselungsmodul 230) auf dieses Krypto-Modul 222 zurück.

Das symmetrische Signiermodul 211 empfängt zu übertragende Daten 30 von dem Sender 10. In einem beispielhaften und nicht einschränkenden militärischen Kontext, in welchem der Sender 10 und der der Empfänger 20 jeweils Flugzeuge sind, können die zu übertragenden Daten 30 beispielsweise Radardaten oder andere Sensordaten sein, welche die Flugzeuge zur Datenfusion in nahezu Echtzeit austauschen. Grundsätzlich können die zu übertragenden Daten 30 jedoch auch andere Daten sein. Das symmetrische Signiermodul 211 ist konfiguriert, diese zu übertragenden Daten 30 unter Verwendung eines symmetrischen Kryptographieverfahrens zu signieren. Dazu ruft das symmetrische Signiermodul 211 den symmetrischen Schlüssel 50 aus dem Schlüssel-Speicherelement 220 bzw. aus dessen Schlüsselspeicher 221 ab und führt damit das Signierverfahren durch, oder, in entsprechenden Ausführungsformen, verwendet das Krypto-Modul 222 zu diesem Zweck. Die so erhaltenden symmetrisch signierten Daten 40 werden dann an den Empfänger 20 gesendet, welcher die symmetrische Signatur dieser symmetrisch signierten Daten 40 wiederum in gleicher, nur umgekehrter Weise, mit einer Kopie des symmetrischen Schlüssels 50 überprüfen kann, um die Herkunft der Daten zu überprüfen und damit die Integrität und Authentizität sicherzustellen.

Symmetrische Kryptographieverfahren ermöglichen allerdings aufgrund der Tatsache, dass mehrere Entitäten im Besitz des symmetrischen Schlüssels 50 sind, keine eindeutige Zuordnung der Signatur zu einem Erzeuger und damit keine Nichtabstreitbarkeit, wie in dieser Offenbarung einleitend erläutert. Asymmetrische Kryptographieverfahren ermöglichen diese Nichtabstreitbarkeit zwar, sind allerdings insbesondere in zeitkritischen Anwendungen zu langsam. Aus diesem Grund werden die schnell erstellbaren symmetrisch signierten Daten 40 in der akuten Anwendung durch den Sender 10 und Empfänger 20 verwendet.

Um die Nichtabstreitbarkeit sicherzustellen, werden die zu übertragenden Daten 30 parallel mittels des asymmetrischen Signiermoduls 212 mittels eines asymmetrischen Kryptographieverfahrens unter Verwendung des privaten Schlüssels 61 aus dem Schlüssel-Speicherelement 220 signiert. Die asymmetrisch signierten Daten 70 werden dann in dem Audit-Speicher 80 gespeichert, um, falls nötig, später mittels eines öffentlichen Schlüssels 62, welcher dem privaten Schlüssel 61 zugeordnet ist, überprüft werden zu können. Der asymmetrische Signaturvorgang wird dabei so ausgeführt, dass der symmetrische Signaturvorgang nicht blockiert wird. Das asymmetrische Signiermodul 212 kann entsprechend zu signierende Daten beispielsweise in einer Art Warteschleife abarbeiten, ohne das symmetrische Signiermodul 211 anzuhalten.

Optional können die zu übertragenden Daten 30 zudem durch das optionale Verschlüsselungsmodul 230 mittels eines symmetrischen und/oder asymmetrischen Kryptographieverfahrens unter Verwendung der entsprechenden Schlüssel (symmetrischer Schlüssel 50 (oder ein anderer symmetrischer Schlüssel, als der zum Signieren verwendete, der sowohl dem Empfänger als auch dem Empfänger zur Verfügung steht) bzw. öffentlicher Schlüssel des Empfängers) verschlüsselt werden.

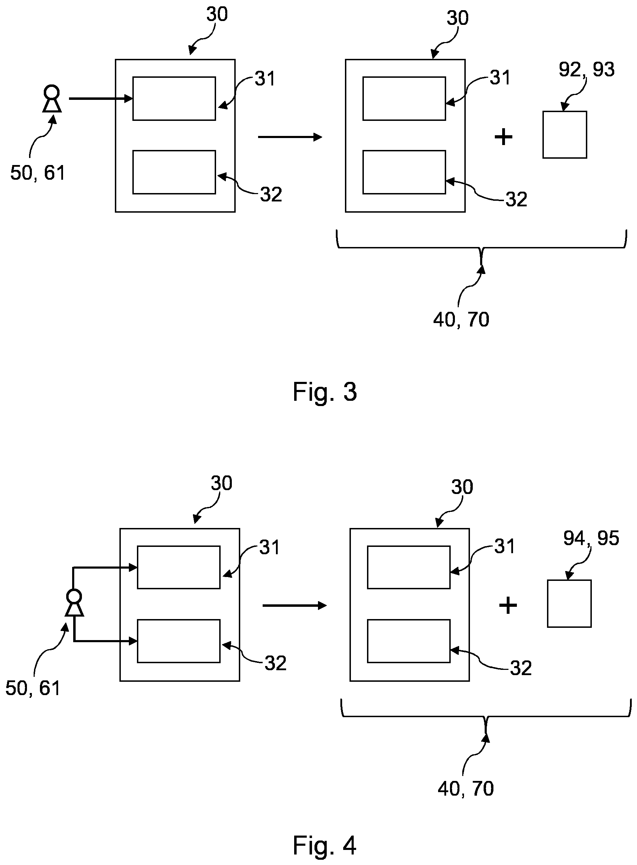

Die zu übertragenden Daten 30 umfassen im Allgemeinen Nutzdaten 31 und Metadaten 32 (Nutzdaten 31 und Metadaten 32 in Fig. 1 nicht dargestellt; vgl. Fig. 3). Grundsätzlich können entweder nur die Nutzdaten 31 oder die Nutzdaten 31 und die Metadaten 32 zusammen signiert und/oder verschlüsselt werden. Die Nutzdaten 31 entsprechen den eigentlichen zu übertragenden Daten, z.B. Sensordaten. Die Metadaten 32 können beispielsweise eine Sicherheitsklassifizierung der Nutzdaten 31 sowie eine Freigabe für bestimmte Personen, Gruppen oder Nationen beinhalten. Die Metadaten 32 können beispielsweise durch das optionale Gateway 91, das sich in einem Übertragungsweg 90 zwischen der Vorrichtung 100 und dem Empfänger 20 befindet, verwendet werden, um sicherzustellen, dass die zu übertragenden Daten 30 bzw. die symmetrische signierten Daten 40 nicht an Nichtberechtigte weitergesendet werden. Das optionale Gateway 90 fungiert deshalb als weitere Sicherheitsbarriere. Das Gateway 90 kann ebenso Teil der Vorrichtung 200 sein oder kann ein Gerät sein, das extern zu der Vorrichtung 200 ist (z.B. in einer Bodenstation, einem anderen befreundeten Flugzeug, etc.). Das Signieren der vollständigen zu übertragenden Daten 30 (d.h. der Nutzdaten 31 und der Metadaten 32) ermöglicht wiederum dem Gateway 90, die Integrität und Authentizität der Daten sicherzustellen.

Fig. 2 zeigt ein Flussdiagramm eines Verfahrens 100 zum nicht-abstreitbaren Übertragen von signierten Daten von einem Sender 10 zu einem Empfänger 20. Das Verfahren 100 kann beispielsweise mit der in Fig. 1 dargestellten und beschriebenen Vorrichtung 200 durchgeführt werden. Im Folgenden wird zusätzlich zu Fig. 2 weiterhin Bezug auf Fig. 1 genommen.

Das Verfahren 100 beginnt in einem Schritt 110 mit dem Bereitstellen von zu übertragenden Daten 30. Beispielsweise kann der Sender 10 der Vorrichtung 200 zu übertragende Daten 30 (z.B. Sensordaten, etc.) bereitstellen.

In einem Schritt 120 erfolgt dann, wie oben in Bezug auf die Vorrichtung 200 beschrieben, ein Signieren der zu übertragenden Daten 30 mittels eines symmetrischen Kryptographieverfahrens. Das entsprechende Vorgehen wurde mit Bezug auf das System 300 und Fig. 1 im Detail beschrieben und die entsprechenden Ausführungen werden der Kürze halber nicht wiederholt.

In einem Schritt 130, der bevorzugt unmittelbar nach Abschluss des Schritts 120 erfolgt, werden die symmetrisch signierten Daten 40 an den Empfänger 20 (z.B. kabelgebunden oder kabellos / per Funk, je nach Anwendung des Verfahrens) übertragen.

In einem Schritt 140, der zumindest teilweise parallel mit Schritt 120 erfolgen kann (es ist allerdings auch denkbar, dass alle asymmetrischen Signiervorgänge gesammelt auch später stattfinden, da diese nicht zeitkritisch sind, da die asymmetrisch signierten Daten nur zu späteren Überprüfung vorgehalten werden) und insbesondere die Operationen von Schritt 120 in keiner Weise beeinträchtigt oder blockiert, werden die zu übertragenden Daten 30 mittels eines asymmetrischen Kryptographieverfahrens signiert. Wenn mehrere Datenpakete signiert und übertragen werden sollen, können diese beispielsweise in einer Warteschleife durch das asymmetrischen Signiermodul 212 der Fig. 1 abgearbeitet werden, ohne den Betrieb des symmetrischen Signiermoduls 211 zu beeinträchtigen.

Die so erhaltenden asymmetrisch signierten Daten 70 werden in einem Schritt 150 in dem Audit-Speicher 80 zur möglicherweise späteren Überprüfung abgelegt/gespeichert. Optional können die zu übertragenden Daten 30 in einem Schritt 121, der vor oder nach den Signiervorgängen 120, 140 stattfindet, verschlüsselt werden, wie hierin weiter oben beschrieben.

Fig. 3 zeigt ein beispielhaftes Szenario, in welchem nur die Nutzdaten 31 von zu übertragenden Daten 30 signiert werden. Ein Paket zu übertragender Daten 30 umfasst im Allgemeinen Nutzdaten 31 und Metadaten 32, wie oben beschrieben. In diesem Szenario werden die Nutzdaten 31 mit dem jeweiligen Schlüssel (d.h. dem symmetrischen Schlüssel 50 für das symmetrische Kryptographieverfahren und dem privaten Schlüssel 61 für das asymmetrische Kryptographieverfahren) signiert. Daraus entstehen die zu übertragenden Daten 30 sowie eine symmetrischen Signatur 92 (für das symmetrische Signaturverfahren) bzw. eine asymmetrische Signatur 93 (für das asymmetrische Signaturverfahren. Im Fall des symmetrischen Kryptographieverfahrens bilden die zu übertragenden Daten 30 und die symmetrische Signatur 92 zusammen die symmetrisch signierten Daten 40, welchen an den Empfänger 20 übermittelt werden. Im Falle des asymmetrischen Kryptographieverfahrens bilden die zu übertragenden Daten 30 und die asymmetrische Signatur 93 die asymmetrisch signierten Daten 70, die in dem Audit-Speicher 80 gespeichert werden.

Fig. 4 zeigt ein beispielhaftes Szenario, in welchem sowohl die Nutzdaten 31 als auch die Metadaten 32 der zu übertragenden Daten signiert werden. Diese Szenario unterscheidet sich von dem der Fig. 3 dadurch, dass der jeweilige Schlüssel 50, 61 sowohl auf die Nutzdaten als auch auf die Metadaten angewendet wird. In diesem Szenario werden also sowohl die Nutzdaten 31 als auch die Metadaten 32 mit dem jeweiligen Schlüssel (d.h. dem symmetrischen Schlüssel 50 für das symmetrische Kryptographieverfahren und dem privaten Schlüssel 61 für das asymmetrische Kryptographieverfahren) signiert. Daraus entstehen die zu übertragenden Daten 30 sowie ein sogenanntes symmetrisches Sicherheitskennzeichen 94 (für das symmetrische Signaturverfahren; das Sicherheitskennzeichen 94 entspricht einer Signatur, die ebenfalls auf die Metadaten 32 berechnet wurde anstelle nur auf die Nutzdaten 31) bzw. ein asymmetrisches Sicherheitskennzeichen 95 (für das asymmetrische Signaturverfahren; das Sicherheitskennzeichen 95 entspricht einer Signatur, die ebenfalls auf die Metadaten 32 berechnet wurde anstelle nur auf die Nutzdaten 31). Im Fall des symmetrischen Kryptographieverfahrens bilden die zu übertragenden Daten 30 und das symmetrische Sicherheitskennzeichen 94 zusammen die symmetrisch signierten Daten 40, welchen an den Empfänger 20 übermittelt werden. Im Falle des asymmetrischen Kryptographieverfahrens bilden die zu übertragenden Daten 30 und das asymmetrische Sicherheitskennzeichen 93 die asymmetrisch signierten Daten 70, die in dem Audit-Speicher 80 gespeichert werden. Es können in diesem Szenario auch nur die symmetrisch signierten Daten 40 in dieser Weise signiert werden, wohingegen die asymmetrisch signierten Daten 70 optional auch lediglich gemäß dem Szenario der Fig. 3 signiert werden können, d.h. nur mit den Nutzdaten 31.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### BEZUGSZEICHENLISTE

- 10: Sender
- 20: Empfänger
- 30: zu übertragenden Daten
- 31: Nutzdaten
- 32: Metadaten
- 40: symmetrisch signierte Daten
- 50: symmetrischer Schlüssel
- 61: privater Schlüssel eines asymmetrischen Schlüsselpaares
- 62: öffentlicher Schlüssel eines asymmetrischen Schlüsselpaares
- 70: asymmetrisch signierte Daten
- 80: Audit-Speicher
- 90: Übertragungsweg
- 91: Gateway
- 92: symmetrische Signatur
- 93: asymmetrische Signatur
- 94: symmetrisches Sicherheitskennzeichen
- 95: asymmetrisches Sicherheitskennzeichen

- 100: Verfahren
- 110: Bereitstellen von zu übertragenden Daten
- 120: symmetrisches Signieren von Daten
- 121: Verschlüsseln der zu übertragenden bzw. symmetrisch signierten Daten
- 130: Übertragen symmetrisch signierter Daten
- 140: asymmetrisches Signieren von Daten
- 150: Speichern asymmetrisch signierter Daten in Audit-Speicher

- 200: Vorrichtung zum nicht-abstreitbaren Übertragen von signierten Daten
- 210: Datenverarbeitungsmodul
- 211: symmetrisches Signiermodul
- 212: asymmetrisches Signiermodul
- 220: Schlüssel-Speicherelement
- 221: Schlüsselspeicher
- 222: Krypto-Modul
- 230: Verschlüsselungsmodul

- 300: System

## Patentansprüche

1. Verfahren (100) zum nicht-abstreitbaren Übertragen von signierten Daten (40) zwischen einem Sender (10) und einem Empfänger (20) in zeitkritischen Anwendungen, das Verfahren umfassend:
Bereitstellen (110) von zu übertragenden Daten (30) durch den Sender (10);
Signieren (120) der zu übertragenden Daten (30) mittels eines symmetrischen Kryptographieverfahrens unter Verwendung eines symmetrischen Schlüssels (50), um symmetrisch signierte Daten (40) zu erhalten;
Übertragen (130) der symmetrisch signierten Daten (40) von dem Sender (10) zu dem Empfänger (20) über einen Übertragungsweg (90);
Signieren (140) der zu übertragenden Daten (30) mittels eines asymmetrischen Kryptographieverfahrens unter Verwendung eines privaten Schlüssels (61) des Senders (10), um asymmetrische signierte Daten (70) zu erhalten; und
Speichern (150) der asymmetrisch signierten Daten (70) in einem Audit-Speicher (80).

2. Verfahren (100) nach Anspruch 1, das Verfahren (100) ferner umfassend das Verifizieren (160) der Integrität und der Authentizität der übertragenen symmetrisch signierten Daten (40) durch den Empfänger (20) unter Verwendung des symmetrischen Schlüssels (50).

3. Verfahren (100) nach einem der vorstehenden Ansprüche, wobei das Signieren (140) mittels des asymmetrischen Kryptographieverfahrens gleichzeitig mit dem Signieren (120) mittels des symmetrischen Kryptographieverfahrens eingeleitet wird.

4. Verfahren (100) nach einem der vorstehenden Ansprüche, wobei das Übertragen (130) der symmetrisch signierten Daten (40) ein in dem Übertragungsweg (90) vorhandenes Gateway (91) umfasst, welches die symmetrisch signierten Daten (40) von dem Sender (10) empfängt und an den Empfänger (20) weiterleitet.

5. Verfahren (100) nach einem der vorstehenden Ansprüche, wobei die zu übertragenden Daten (30) Nutzdaten (31) und Metadaten (32) umfassen.

6. Verfahren (100) nach Anspruch 5, wobei das Signieren (120) der zu übertragenden Daten (30) mittels des symmetrischen Kryptographieverfahrens das Signieren (120) nur der Nutzdaten (31) der zu übertragenden Daten (30) umfasst.

7. Verfahren (100) nach Anspruch 5, wobei das Signieren (120) der zu übertragenden Daten (30) mittels des symmetrischen Kryptographieverfahrens das Signieren (120) sowohl der Nutzdaten (31) als auch der Metadaten (32) der zu übertragenden Daten (30) umfasst.

8. Verfahren (100) nach einem der vorstehenden Ansprüche, ferner umfassend das Verschlüsseln (121) der symmetrisch signierten Daten (40) vor dem Übertragen (130) der symmetrisch signierten Daten (40) an den Empfänger (20).

9. Vorrichtung (200) zum nicht-abstreitbaren Übertragen von signierten Daten (40) zwischen einem Sender (10) und einem Empfänger (20), das System (200) umfassend:
ein Datenverarbeitungsmodul (210);
ein Schlüssel-Speicherelement (220); und
einen Audit-Speicher (80);
wobei das System (200) konfiguriert ist, das Verfahren nach einem der vorstehenden Ansprüche auszuführen;
wobei das Datenverarbeitungsmodul (210) konfiguriert ist:
den symmetrischen Schlüssel (50) aus dem Schlüssel-Speicherelement (220) abzurufen und das Signieren (120) der zu übertragenden Daten (30) mittels des symmetrischen Kryptographieverfahrens durchzuführen;
den privaten Schlüssel (61) aus dem Schlüssel-Speicherelement (220) abzurufen und das Signieren (140) der zu übertragenden Daten (30) mittels des asymmetrischen Kryptographieverfahrens durchzuführen;
das Übertragen (130) der symmetrisch signierten Daten (40) durchzuführen; und
das Speichern (150) der asymmetrisch signierten Daten (70) durchzuführen.

10. Vorrichtung (200) nach Anspruch 9, wobei das Schlüssel-Speicherelement (220) ein sicheres Element (220) ist.

11. Vorrichtung (200) nach Anspruch 9 oder 10, ferner umfassend ein Verschlüsselungsmodul (230);
wobei das Verschlüsselungsmodul (230) konfiguriert ist, die zu übertragenden Daten (30) zu verschlüsseln.

12. System (300), umfassend:
einen Sender (10); und
eine Vorrichtung (200) nach einem der Ansprüche 9 bis 11;
wobei die Vorrichtung (200) Teil des Senders (10) ist.

13. System (300) nach Anspruch 12, ferner umfassend ein mit der Vorrichtung (200) in Kommunikation stehendes Gateway (90).

14. System (300) nach Anspruch 13, wobei das Gateway (90) konfiguriert ist, die symmetrisch signierten Daten (40) zu empfangen, Metadaten (32) der symmetrisch signierten Daten (40) auszuwerten, und die symmetrischen signierten Daten (40) in Übereinstimmung mit Vorgaben in den Metadaten (32) an den Empfänger (20) weiterzuleiten.

15. System (300) nach einem der Ansprüche 12 bis 14, ferner umfassend einen Empfänger (20);
wobei sowohl der Sender (10) als auch der Empfänger (20) jeweils ein Luftfahrzeug (10, 20) ist.
